# EUROPEAN PATENT SPECIFICATION

(11) **EP 3 300 404 B1**
(45) Date of publication and mention of the grant of the patent: **16.10.2019**
(21) Application number: 15892288.0
(22) Date of filing: 03.07.2015
(51) Int. Cl.: H04W 12/06, H04W 4/80, H04W 8/00

(54) **WIRELESS CONNECTION METHOD AND APPARATUS, AND TERMINAL**
DRAHTLOSVERBINDUNGSVERFAHREN UND -VORRICHTUNG SOWIE ENDGERÄT
PROCÉDÉ ET APPAREIL DE CONNEXION SANS FIL, ET TERMINAL

(30) Priority: 20.05.2015 CN 201510259249
(43) Date of publication of application: 28.03.2018
(73) Proprietor: ZTE Corporation, Shenzhen, Guangdong 518057 (CN)
(72) Inventor: XUE, Tao, Shenzhen Guangdong 518057 (CN)
(74) Representative: Aipex B.V.
(86) International application number: PCT/CN2015/083321
(87) International publication number: WO 2016/183910

(56) References cited:
- WO-A1-2013/008939
- WO-A1-2014/030965
- CN-A- 102 869 121
- CN-A- 103 269 509
- CN-A- 104 168 381
- US-A1- 2003 084 163
- US-A1- 2008 080 407

## Description

### TECHNICAL FIELD

The present disclosure relates to the field of communication technologies, and in particular to a wireless connection method and apparatus, and a terminal.

### BACKGROUND

Connection such as Bluetooth connection between existing terminals is established by way of the same verification code by handshake determining two Bluetooth devices. Alternatively, a WIFI connection is established by searching for a WIFI hotspot and then by performing authentication certification on the hotspot. Whereas, connection establishment of applications such as AliveShare and SHAREit is implemented by making a hotspot using a mobile phone and allowing other mobile phones to connect the wireless hotspot and perform internal handshake verification.

As can be seen from the above content, existing connection establishment procedures are relatively complex, needing a large number of manual operations performed by a user, which increases use cost for the user and causing poor user experience.

This section provides background information related to the present invention which is not necessarily prior art.

US 2008/080407A1 relates to a method for associating devices in a personal area network (PAN). Device association is initiated by applying a stimulus to two devices simultaneously, the timing of the stimulus identifying devices to be paired thereby eliminating the need for PINs and passcodes in pairing devices. Upon stimulation the devices record a timestamp (404) for the stimulus and begin searching (406) for other in-range devices with which they can associate. Upon finding an in-range device an association request (408) is sent containing the elapsed time since the stimulus was applied. The in-range device compares the received elapsed time against its internal elapsed time since receiving the stimulus (412) (416) to determine if the stimuli occurred simultaneously to both devices. If the stimuli were substantially simultaneous, then the devices form a PAN association (418).

WO 2013/008939A1 relates to a wireless communication system including code transmitters (20a, 20b) each configured to transmit a time-varying code; code receivers (30a, 30b) each configured to receive the time-varying codes transmitted from the code transmitters (20a, 20b) and generate a fingerprint based on the received time-varying codes, the fingerprint being unique to a space where the time-varying codes are receivable; and terminal devices (40a, 40b) configured to establish wireless communication connection therebetween with authentication. The terminal devices (40a, 40b) are connected to the code receivers (30a, 30b), respectively. Each terminal device (40a, 40b) includes a fingerprint acquiring unit configured to acquire the fingerprint from the code receiver (30a, 30b), a wireless communication unit configured to transmit and receive the fingerprint via wireless communication, and an authentication unit configured to authenticate another terminal device if the fingerprint received from the another terminal device matches the fingerprint acquired from the code receiver connected thereto.

WO 2014/030965A1 relates to a method of establishing, by a first display device, a communication link with a second display device, the method including operations of detecting a first bending motion occurring in the first display device; obtaining information about a second bending motion occurring in the second display device; and establishing a communication link for a data exchange with the second display device, based on a start time of the first bending motion and a start time of the second bending motion.

### SUMMARY

According to the present invention, a wireless connection method, a wireless connection apparatus, a terminal comprising the wireless connection apparatus, and a computer readable storage medium are provided, as defined in the annexed claims.

Embodiments of the present disclosure provide a wireless connection method and apparatus, and a terminal to implement rapid establishment of a connection between terminals, provide a simple and convenient operation, reduce use cost for a user and improve the user experience. An embodiment of the present disclosure provides a wireless
connection method, which is applied to a first terminal, where the method includes:
performing matching authentication on acquired first user information with a first template of a first terminal, where the first template is used for verifying whether a wireless communication function of the first terminal is enabled;
generating first time information when the first user information matches the first template, where the first time information is generated by the first terminal according to time at which the matching between the first user information and the first template is completed;
receiving second time information sent by a second terminal; where the second time information is generated by the second terminal according to time at which the matching between the acquired second user information and a second template of the second terminal is completed; and
establishing a wireless connection between the first terminal and the second terminal according to the first time information of the first terminal and the second time information of the second terminal.

Alternatively, the establishing a wireless connection between the first terminal and the second terminal according to the first time information of the first terminal and the second time information of the second terminal includes:
comparing the first time information with the second time information to obtain a comparison result; and
establishing the wireless connection between the first terminal and the second terminal when the comparison result is within a preset threshold range.

Alternatively, the establishing a wireless connection between the first terminal and the second terminal according to the first time information of the first terminal and the second time information of the second terminal specifically includes:
determining whether the first time information satisfies a preset access rule;
setting the first terminal as a to-be-accessed party when the preset access rule is satisfied;
comparing the first time information with the second time information according to the received second time information of the second terminal to obtain a comparison result; and
establishing the wireless connection between the first terminal and the second terminal when the comparison result is within a preset threshold range.

Alternatively, both the first time information and the second time information are N-digit time data.

Correspondingly, the determining whether the first time information satisfies a preset access rule includes:
acquiring first data in the first time information, where the first data are N^{th}-digit data in the first time information; and
determining whether the first time information satisfies the preset access rule according to odevity of the first data.

Alternatively, the establishing a wireless connection between the first terminal and the second terminal according to the first time information of the first terminal and the second time information of the second terminal specifically further includes:
acquiring second data in the first time information when the first terminal is set as the to-be-accessed party and the second time information of the second terminal is not received, where the second data are (N-i)^{th}-digit data of the first time information, and the i denotes acquiring the second data for the i^{th} time; and
determining whether the first time information satisfies the preset access rule according to the odevity of the second data, and going to the step of setting the first terminal as a to-be-accessed party when the first time information satisfies the preset access rule until establishing the wireless connection between the first terminal and the second terminal.

Alternatively, the comparing the first time information with the second time information to obtain a comparison result includes:
acquiring a tolerance or ratio between the first time information and the second time information as the comparison result.

Alternatively, the method further includes:
displaying, in a user interface, a procedure of establishing a connection between the first terminal and the second terminal, where after the wireless connection is established, a successful wireless connection is prompted, and when establishing the wireless connection fails, the user is prompted to reenter the user information.

Alternatively, the method further includes:
automatically enabling the wireless communication function when the first fingerprint information matches the first fingerprint template.

An embodiment of the present disclosure also provides a wireless connection apparatus, which is applied to a first terminal, where the apparatus includes:
a matching authentication module, configured to perform matching authentication on acquired first user information with a first template of the first terminal, where the first fingerprint template is used for verifying whether a wireless communication function of the first terminal is enabled;
a generating module, configured to generate first time information when the first user information matches the first template, where the first time information is generated by the first terminal according to time at which the matching between the first user information and the first template is completed;
a receiving module, configured to receive second time information sent by a second terminal; where the second time information is generated by the second terminal according to time at which the matching between the second user information acquired by the second terminal and a second template of the second terminal is completed; and
a wireless connection establishing module, configured to establish a wireless connection between the first terminal and the second terminal according to the first time information of the first terminal and the second time information of the second terminal.

Alternatively, the wireless connection establishing module includes:
a first comparison submodule, configured to compare the first time information with the second time information to obtain a comparison result; and
a first access submodule, configured to establish the wireless connection between the first terminal and the second terminal when the comparison result is within a preset threshold range.

Alternatively, the wireless connection establishing module includes:
a determining submodule, configured to determine whether the first time information satisfies a preset access rule;
a setting submodule, configured to set the first terminal as a to-be-accessed party when the preset access rule is satisfied;
a second comparison submodule, configured to compare the first time information with the second time information according to the received second time information of the second terminal to obtain a comparison result; and
a second access submodule, configured to establish the wireless connection between the first terminal and the second terminal when the comparison result is within a preset threshold range.

Alternatively, both the first time information and the second time information are N-digit time data.
correspondingly, the determining submodule comprises:
a first acquiring unit, configured to acquire first data in the first time information, where the first data are N^{th}-digit data in the first time information; and
a determining unit, configured to determine whether the first time information satisfies the preset access rule according to odevity of the first data.

Alternatively, the wireless connection establishing module further includes:
an acquiring submodule, configured to acquire second data in the first time information when the first terminal is set as the to-be-accessed party and the second time information of the second terminal is not received, where the second data are (N-i)^{th}-digit data of the first time information, and the i denotes acquiring the second data for the i^{th} time; and
a processing submodule, configured to determine whether the first time information satisfies the preset access rule according to the odevity of the second data, and set the first terminal as a to-be-accessed party when the first time information satisfies the preset access rule to establish the wireless connection between the first terminal and the second terminal.

Alternatively, the first comparison submodule includes:
a second acquiring unit, configured to acquire a tolerance or ratio between the first time information and the second time information as the comparison result.

Alternatively, the second comparison submodule includes:
a third acquiring unit, configured to acquire a tolerance or ratio between the first time information and the second time information as the comparison result.

Alternatively, the apparatus further includes:
a display module, configured to display, in a user interface, a procedure of establishing a connection between the first terminal and the second terminal, where after the wireless connection is established, a successful wireless connection is prompted, and when establishing the wireless connection fails, the user is prompted to reenter the user information.

Alternatively, the apparatus further includes:
an enabling module, configured to automatically enable the wireless communication function when the first user information matches the first template.

An embodiment of the present disclosure also provides a terminal, which includes the above-mentioned wireless connection apparatus.

An embodiment of the present disclosure also provides a computer readable storage medium storing a computer program. The computer program includes program instructions, and when the program instructions are executed by a terminal device, the terminal device is caused to perform the above wireless connection method.

The technical solutions of the embodiments of the present disclosure have following beneficial effects.

According to the wireless connection method provided by the embodiment of the present disclosure, after a user inputs first user information (for example, a fingerprint inputted via a fingerprint sensor) into a first terminal, the first terminal may perform matching authentication on the acquired first user information with a first template preset therein. When the first user information matches the first template, first time information is generated according to time at which the matching is completed upon completion of the matching authentication passed. A wireless connection between the first terminal and the second terminal is established according to the first time information and the second time information sent by the second terminal. The second user information is generated by the second terminal according to time at which the matching between the second user information acquired by the second terminal and a second template of the second terminal is completed. Therefore, the user may perform matching authentication on personalized information of the user with a predefined template, and establish a wireless connection between the terminals according to time information of the time at which the matching is completed. Authentication of the user information is safe and reliable without excessive operations by the user, and further the connection is established according to the automatically generated time information. Therefore, the wireless connection method simplifies connection procedures, reduces threshold for use by the user, and implements rapid connection.

This section provides a summary of various implementations or examples of the technology described in the invention, and is not a comprehensive invention of the full scope or all features of the disclosed technology.

### BRIEF DESCRIPTION OF THE DRAWINGS

The drawings are described herein to provide a further understanding of the invention, which form a part of this application. The exemplary embodiments of the invention and the description thereof are intended to be illustrative of the invention and do not constitute an improper limitation of the invention. In the drawings:
FIG. 1 illustrates a schematic flow diagram of a wireless connection method according to an embodiment of the present disclosure;
FIG. 2 illustrates a schematic flow diagram of applying the wireless connection method into a Bluetooth connection according to an embodiment of the present disclosure;
FIG. 3 illustrates a specific schematic flow diagram of a wireless connection method according to an embodiment of the present disclosure;
FIG. 4 illustrates a schematic flow diagram of applying the wireless connection method into a WIFI connection according to an embodiment of the present disclosure; and
FIG. 5 illustrates a schematic structural diagram of a wireless connection apparatus according to an embodiment of the present disclosure.

### DETAILED DESCRIPTION

The following will make a detailed description of the embodiments of the present invention with reference to the accompanying drawings. It is to be noted that the embodiments of this application and the features in the embodiments may be arbitrarily combined with each other in the case of no conflict. Moreover, though logical sequences are shown in flowcharts, in some cases, the shown or described steps can be performed in sequences different from the shown sequences herein.

Persons skilled in the art may understand that terms such as "first", "second" or the like in the application are merely configured to distinguish among different steps, devices or modules and the like, neither representing any specific technical meaning nor indicating a necessary logic sequence thereamong.

Aiming at the problem that procedures of establishing a wireless connection between existing terminals are complex and need a large number of manual operations performed by a user, which increases use cost for the user and causes poor user experience, an embodiment of the present disclosure proposes a wireless connection method, which can implement to rapidly establish a connection between terminals, the operations are simple and convenient, thereby reducing the use cost for the user and improving the user experience.

### The first embodiment

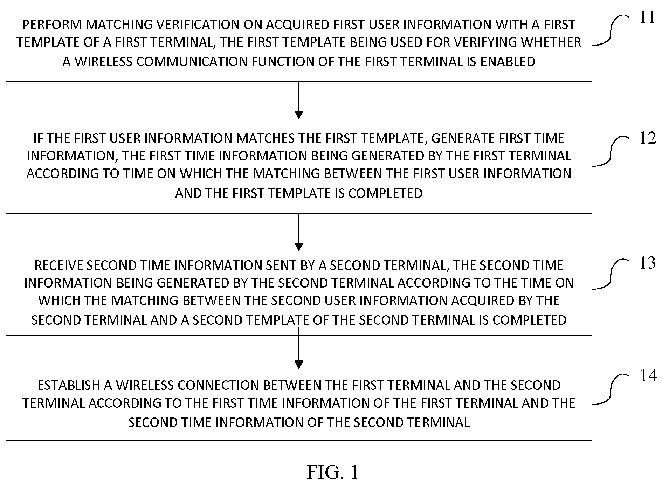

As shown in FIG. 1, a wireless connection method according to a first embodiment of the present disclosure is applied to a first terminal, where the method includes following steps:
Step 11: performing matching authentication on acquired first user information with a first template of a first terminal, where the first template is used for verifying whether a wireless communication function of the first terminal is enabled;
Step 12: generating first time information when the first user information matches the first template, where the first time information is generated by the first terminal according to time at which the matching between the first user information and the first template is completed;
Step 13: receiving second time information sent by a second terminal; where the second time information is generated by the second terminal according to time at which the matching between the second user information acquired by the second terminal and a second template of the second terminal is completed; and
Step 14: establishing a wireless connection between the first terminal and the second terminal according to the first time information of the first terminal and the second time information of the second terminal.

The above user information refers to identity information that can represent an identity of the user, for example, fingerprint information has lifelong immutability, uniqueness, and convenience, which has become an important identifier for personal identity authentication. The wireless connection method according to the embodiment of the present disclosure is applied to a first terminal, which can capture the first user information such as fingerprint information (via a fingerprint sensor), sound information (via a sound recorder), or iris information (via a camera). A corresponding first template is preset in the terminal. Through the above Steps 11-14, after the user inputs first user information into a first terminal, the first terminal may perform matching authentication on the acquired first user information with a first template preset therein. When the first user information matches the first template, first time information is generated according to time at which the matching is completed upon completion of the matching authentication passed. A wireless connection between the first terminal and the second terminal is established according to the first time information and the received second time information sent by the second terminal. The second time information is generated by the second terminal according to time at which the matching between the second user information acquired by the second terminal and a second template of the second terminal is completed. The user may perform matching authentication on user information that can represent the identity of the user with a predefined template, and then establish a wireless connection between the terminals according to time information of the time at which the matching is completed. Authentication of the user information is safe and reliable without excessive operations by the user, and further a connection mode is determined to establish the connection according to the automatically generated time information. Therefore, the connection procedures are simplified, the threshold for use by the user is reduced, and a rapid connection is implemented.

Step 12 and Step 13 may be performed in sequence, or of course may be performed simultaneously, or Step 13 may be performed before Step 12, which also can implement to rapidly establish the wireless connection.

The first user template is used for verifying whether a wireless communication function of the first terminal is enabled.

Correspondingly, the method further includes following steps:
Step 15: automatically enabling the wireless communication function when the first user information matches the first template.

A corresponding wireless communication function (such as Bluetooth connection, WIFI connection, or WIFI hotspot connection) may be set for the preset template, so that the wireless communication function can be automatically enabled when the template matches the user information inputted by the user upon a matching authentication, thereby simplifying operations for the user.

### The second embodiment

In the second embodiment of the present disclosure, based on all the steps included in the method according to the first embodiment, in the Step 14, the establishing the wireless connection between the first terminal and the second terminal according to the first time information of the first terminal and the second time information of the second terminal specifically includes following steps:
Step 141a: comparing the first time information with the second time information to obtain a comparison result; and
Step 142a: establishing the wireless connection between the first terminal and the second terminal when the comparison result is within a preset threshold range.

In this embodiment, for the wireless communication function which does not need to set a terminal access relation, it is only required to compare the acquired first time information with the second time information according to Step 141a and Step 142a to obtain a comparison result. When the comparison result is within a preset threshold range, the wireless connection between the first terminal and the second terminal is established by setting the first terminal as an accessed party and allowing the second terminal to serve as an accessing party and access the first terminal. When the user expects to establish the connection between the first terminal and the second terminal, the user nearly inputs the user information at the same time so that the time at which the matching is completed is quite approximate. In such a case, the obtained first time information is also approximate to the second time information, the comparison result is within a preset threshold range, the first terminal is set as an accessed party, and the second terminal is allowed to serve as an accessing party and access the first terminal. For the wireless communication function which does not need to select a terminal access relation, after the user information of high security is subject to matching authentication, time at which the matching succeeds is automatically used as the time information for authentication, complex steps such as manual password authentication or authentication by generating a random number are not required, and thus it is simple and convenient.

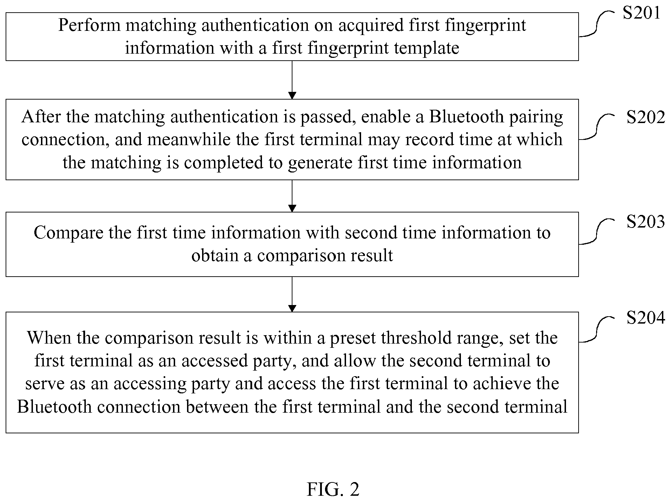

As shown in FIG. 2, taking Bluetooth connection procedures as an example, both the first terminal and the second terminal have a fingerprint sensor. A user predefines a certain fingerprint template as a switch for enabling a Bluetooth pairing connection, and two users respectively use their own fingerprint to enable the Bluetooth pairing connection. Herein the first terminal of the user A is described as below. In S201, the first terminal performs matching authentication on acquired first fingerprint information with a first fingerprint template. In S202, after the matching authentication is passed, a Bluetooth pairing connection is enabled, and meanwhile the first terminal may record time (recorded by a fingerprint sensor) at which the matching is completed to generate first time information. In S203, the first time information is compared with second time information (received, and generated according to time at which the matching between second fingerprint information acquired by the second terminal and a second fingerprint template of the second terminal is completed) to obtain a comparison result. In S204, when the comparison result is within a preset threshold range, the first terminal is set as an accessed party, and the second terminal is allowed to serve as an accessing party and access the first terminal to achieve the Bluetooth connection between the first terminal and the second terminal. In this embodiment, the time information needing to be transferred may be replaced with a password in a password generation procedure in a Bluetooth protocol transmission message.

### The third embodiment

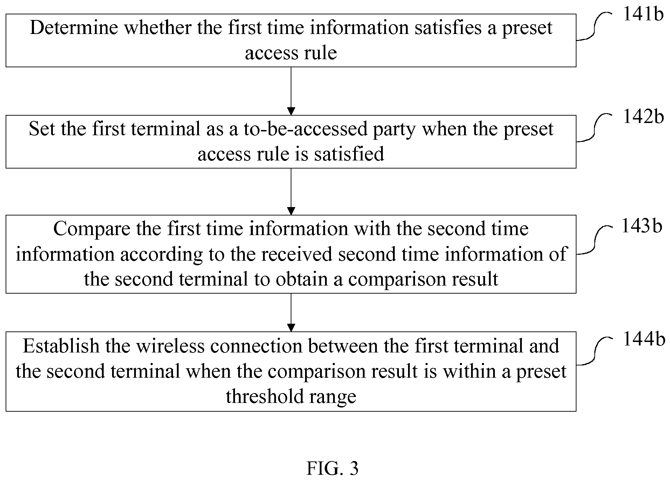

In the third embodiment of the present disclosure, based on all the steps included in the method according to the first embodiment, as shown in FIG. 3, in the Step 14, the establishing the wireless connection between the first terminal and the second terminal according to the first time information of the first terminal and the second time information of the second terminal specifically includes following steps:
Step 141b: determining whether the first time information satisfies a preset access rule;
Step 142b: setting the first terminal as a to-be-accessed party when the preset access rule is satisfied;
Step 143b: comparing the first time information with the second time information according to the received second time information of the second terminal to obtain a comparison result; and
Step 144b: establishing the wireless connection between the first terminal and the second terminal when the comparison result is within a preset threshold range.

In this embodiment, for the wireless communication function which needs to select a terminal access relation, the wireless connection of the final terminal may be implemented by determining and setting the accessing party and the accessed party. The access rule is predefined. The condition that whether the terminal may be set as the to-be-accessed party is limited, for example, the access rule is that the time information is an odd number. Thus, only when the first time information is an odd number can the first terminal be set as the to-be-accessed party. Of course, the access rule may be set by the user. Through Steps 141b-144b, the first terminal may first determine whether the first time information thereof satisfies the access rule. When the first time information satisfies the preset access rule, it is unable to definitely determine the first terminal as the accessed party, but the first terminal may be determined as the to-be-accessed party. After receiving the second time information, the first time information may be compared with the second time information to obtain a comparison result. When the comparison result is within a preset threshold range, the first terminal may be determined as an accessed party, the first terminal may be set as the accessed party, and the second terminal is allowed to serve as an accessing party and access the first terminal to establish the wireless connection between the first terminal and the second terminal. Compared with an existing wireless connection method, in this method, the user does not need to open WIFI, search, select a hotspot, enter a password, and so on. The user only needs to perform an operation of fingerprint input, and then set the accessing party and the accessed party according to the preset access rule and the generated time information to achieve the connection between the first terminal and the second terminal. Therefore, in the premise that the fingerprint matching authentication is safe, connection procedures are simplified, a large number of manual operations are avoided for the user, and the use experience may be improved for the user.

### The fourth embodiment

In the fourth embodiment of the present disclosure, based on all the steps included in the method according to the third embodiment, both the first time information and the second time information are N-digit time data.

Correspondingly, in the Step 141b, the determining whether the first time information satisfies a preset access rule specifically includes following steps:
Step 141b1: acquiring first data in the first time information, where the first data are N^{th}-digit data in the first time information; and
Step 141b2: determining whether the first time information satisfies the preset access rule according to odevity of the first data.

The terminal needs to record time at which the matching authentication between the user information and the template succeeds. Generally the time of the system is current time generated based on Greenwich Mean Time (12:00:00, January 1, 1970, AM GMT) plus time data (ms) of a long int. The first time information and the second time information in the embodiments of the present disclosure do not need to record complete time data, but only need to generate N-digit time data, where the N is an integer that is set greater than or equal to 1 as needed. For example, long int data obtained when the fingerprint matching succeeds need to be recorded as the time information. For example, the long int data of 15:12, March 24, 2015 is 1427181128659, which is 13-digit time data. In the embodiments of the present disclosure, the first data (N^{th}-digit data of the first time information) in the first time information are acquired, and it is determined whether the first time information satisfies the preset access rule according to odevity of the first data. The first terminal is set as a to-be-accessed party when the preset access rule is satisfied. In this case, when the acquired first data are odd, the first terminal may be set as the to-be-accessed party if it can be determined that the first time information satisfies the preset access rule according to odevity of the first data.

Continued with the above example, when the first data (N^{th}-digit data of the second time information) in the second time information of the second terminal also are odd, the access rule is satisfied, the second terminal also is set as the to-be-accessed party, no interaction of time information exists between the second terminal and the first terminal, so that neither the second terminal nor the first terminal may send the time information of its own to the other party, and thus it is impossible to establish a connection. In this case, based on the above embodiment, in the Step 14, the determining a wireless connection mode between the first terminal and the second terminal according to the first time information of the first terminal and the second time information of the second terminal specifically further includes following steps:
Step 145b: acquiring second data in the first time information when the first terminal is set as the to-be-accessed party and the second time information of the second terminal is not received, where the second data are (N-i)^{th}-digit data of the first time information, and the i denotes acquiring the second data for the i^{th} time; and
Step 146b: determining whether the first time information satisfies the preset access rule according to the odevity of the second data, and going to the step of setting the first terminal as a to-be-accessed party when the first time information satisfies the preset access rule until establishing the wireless connection between the first terminal and the second terminal.

In this embodiment of the present disclosure, when it is impossible to determine the connection mode between the first terminal and the second terminal according to the N^{th}-digit data, that is, when the first terminal is set as the to-be-accessed party and the second time information of the second terminal is not received, the second data ((N-i)^{th}-digit data of the first time information, where the i denotes acquiring the second data for the i^{th} time, and the i is an integer smaller than N and greater than or equal to 1) in the first time information may be acquired. In this way, it is redetermined in sequence starting from (N-i)^{th}-digit data of the first time information. Of course the second terminal also is redetermined until the second terminal is differentiated from the first terminal, the accessed party and the accessing party are determined, and the wireless connection between the first terminal and the second terminal is established.

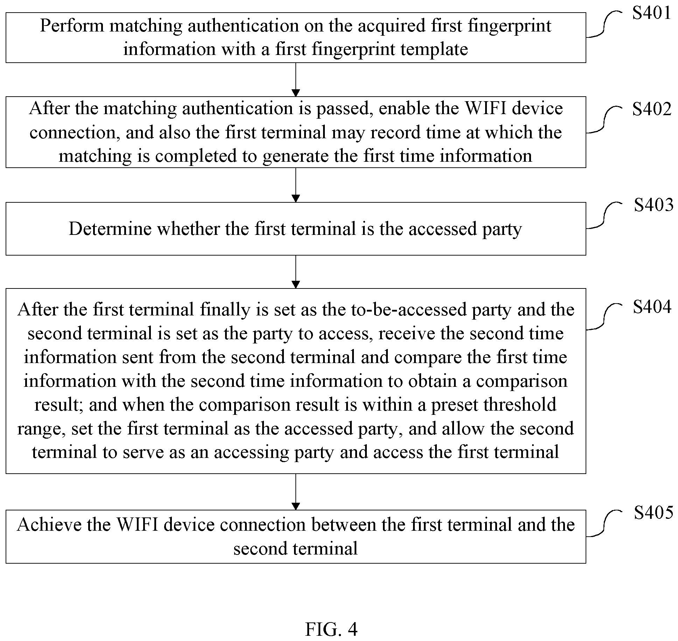

As shown in FIG. 4, taking WIFI device connection procedures as an example, both the first terminal and the second terminal have a fingerprint sensor. A user predefines a certain fingerprint template as a switch for enabling a WIFI device connection, and two users respectively use their own fingerprint to enable the WIFI device connection. The first terminal and/or the second terminal may be set as the to-be-accessed party when the access rule is satisfied. Herein the first terminal of the user B is described, in S401, after the first terminal acquires first fingerprint information, matching authentication is performed on the first fingerprint information and a first fingerprint template. In S402, after the matching authentication is passed, the WIFI device connection is enabled, and also the first terminal may record time (which may be recorded by the fingerprint sensor) at which the matching is completed to generate the first time information. In S403, it is determined whether the first terminal is the accessed party. First, the first data of the first time information are acquired, for example, the thirteenth-digit number "9" in 1427181128659. According to the access rule, the preset access rule is satisfied because the "9" is an odd number, and thus the first terminal is set as the to-be-accessed party. When the first terminal can receive the second time information of the second terminal, this indicates that the second terminal is set as a party to access. When the second terminal also is set as the to-be-accessed party, it is impossible to establish a connection between the first terminal and the second terminal. At this moment, the first terminal may automatically acquire the second data in the first time information, for example, the twelfth-digit number "5" in 1427181128659. The preset access rule is satisfied because the "5" is an odd number, and thus the first terminal is set as the to-be-accessed party. The second time information (the second terminal is set as a party to access) is received, and the first terminal has been differentiated from the second terminal. Afterward, a connection is established according to the above steps, when it is still impossible to differentiate the first terminal from the second terminal, it is continued to determine the eleventh-digit number and so on until the first terminal is differentiated from the second terminal. In S404, after the first terminal finally is set as the to-be-accessed party and the second terminal is set as the party to access, the first terminal receives the second time information sent from the second terminal and compares the first time information with the second time information to obtain a comparison result. When the comparison result is within a preset threshold range, the first terminal is set as the accessed party, and the second terminal is allowed to serve as an accessing party and access the first terminal. In S405, the WIFI device connection between the first terminal and the second terminal is achieved.

As is well known, during a WIFI connection, an access code may be carried when the accessing party accesses the accessed party. Based on the above embodiment, to prevent the terminal from confusing the time information with a WIFI password so that it is impossible to perform corresponding treatment, when the time information is sent to the opposite-end terminal, a particular identifier may be annexed to the time information so that the received terminal can differentiate the time information. For example, the terminal A adds an identifier "$FINGER time" prior to the time information, and after receiving the data sent from the terminal A, the terminal B recognizes the data as the time information according to the identifier "$FINGER time". In this way, the time information posterior to the identifier can be removed and then the identifier with the time information removed is compared with local time information to complete the post processing.

In addition to the above method, for the WIFI connection mode, the terminal for which the fingerprint matching is the earliest completed may be directly acquired and predefined as the party to access, and the other terminals are determined as the accessing parties for wireless connection. Furthermore, other implementations also fall within the scope of protection of the present disclosure without departing from the principles of the present disclosure, which are not enumerated herein.

In Step 141a or Step 143b, the comparing the first time information with the second time information to obtain a comparison result specifically includes:
acquiring a tolerance or ratio between the first time information and the second time information as the comparison result.

The comparison between the first time information and the second time information may be implemented by acquiring a differential, and the obtained tolerance is determined as the comparison result for subsequent decision. For example, the first time information generated by the first terminal upon successful fingerprint matching is 1427181128659, the second time information generated by the second terminal upon successful fingerprint matching is 1427181129103, the tolerance between the first time information and the second time information is 444ms, and the tolerance is determined as the comparison result for decision. Of course, the comparison between the first time information and the second time information also may be implemented by acquiring a ratio, and the obtained ratio is determined as the comparison result for subsequent decision. In addition to the two implementations, other implementations that can achieve the same effect also fall within the scope of protection of the present disclosure, which are not enumerated herein.

Alternatively, based on the above embodiments, the method further includes the following step:
Step 16: displaying, in a user interface, a procedure of establishing a connection between the first terminal and the second terminal, where after the wireless connection is established, a successful wireless connection is prompted, and when establishing the wireless connection fails, the user is prompted to reenter the user information.

The procedure of establishing the connection between the first terminal and the second terminal is displayed in the user interface, for example, "during user information matching", "during information comparison" and so on, which can allow the user to better master real-time processes. Furthermore, after the wireless connection is established, a successful wireless connection may be prompted; and when establishing the wireless connection fails, the user may be prompted to reenter the user information. Moreover, to improve the success rate of the wireless connection, the user is prompted to press a fingerprint on a terminal required for connection simultaneously as much as possible to improve the user experience. In conclusion, according to the wireless connection method of the embodiments of the present disclosure, the corresponding wireless communication function is enabled by comparing whether the user information entered by the user matches a template, and a wireless connection between terminals is established according to time at which matching of the terminal is completed and time at which matching of the received opposite-end terminal is completed. The identity of the current user is determined according to the user information, which has high security. Decision of the wireless connection is implemented by comparing the time at which matching of the user information is completed. Therefore, password generation authentication procedures are simplified, use threshold is reduced for the user, a connection speed is quicker, a large number of manual operations are not needed, and thus the user experience and operation convenience are improved.

### Fifth embodiment

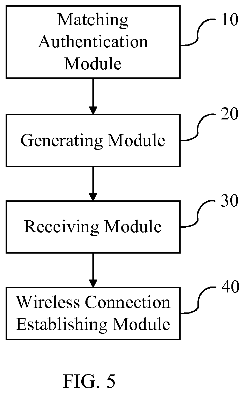

As shown in FIG. 5, an embodiment of the present disclosure also provides a wireless connection apparatus, which is applied to a first terminal, where the apparatus includes a processor and a program storage device, and further includes:
a matching authentication module 10, configured to perform matching authentication on acquired first user information with a first template of the first terminal, where the first fingerprint template is used for verifying whether a wireless communication function of the first terminal is enabled;
a generating module 20, configured to generate first time information when the first user information matches the first template, where the first time information is generated by the first terminal according to time at which the matching between the first user information and the first template is completed;
a receiving module 30, configured to receive second time information sent by a second terminal, where the second time information is generated by the second terminal according to time at which the matching between the second user information acquired by the second terminal and a second template of the second terminal is completed; and
a wireless connection establishing module 40, configured to establish a wireless connection between the first terminal and the second terminal according to the first time information of the first terminal and the second time information of the second terminal.

The wireless connection establishing module includes:
a first comparison submodule, configured to compare the first time information with the second time information to obtain a comparison result; and
a first access submodule, configured to establish the wireless connection between the first terminal and the second terminal when the comparison result is within a preset threshold range.

The wireless connection establishing module includes:
a determining submodule, configured to determine whether the first time information satisfies a preset access rule;
a setting submodule, configured to set the first terminal as a to-be-accessed party when the preset access rule is satisfied;
a second comparison submodule, configured to compare the first time information with the second time information according to the received second time information of the second terminal to obtain a comparison result; and
a second access submodule, configured to establish the wireless connection between the first terminal and the second terminal when the comparison result is within a preset threshold range.

Both the first time information and the second time information are N-digit time data. Correspondingly, the determining submodule includes:
a first acquiring unit, configured to acquire first data in the first time information, where the first data are N^{th}-digit data in the first time information; and
a determining unit, configured to determine whether the first time information satisfies the preset access rule according to odevity of the first data.

The wireless connection establishing module further includes:
an acquiring submodule, configured to acquire second data in the first time information when the first terminal is set as the to-be-accessed party and the second time information of the second terminal is not received, where the second data are (N-i)^{th}-digit data of the first time information, and the i denotes acquiring the second data for the i^{th} time; and
a processing submodule, configured to determine whether the first time information satisfies the preset access rule according to the odevity of the second data, and set the first terminal as a to-be-accessed party when the first time information satisfies the preset access rule to establish the wireless connection between the first terminal and the second terminal.

The first comparison submodule includes:
a second acquiring unit, configured to acquire a tolerance or ratio between the first time information and the second time information as the comparison result.

The second comparison submodule includes:
a third acquiring unit, configured to acquire a tolerance or ratio between the first time information and the second time information as the comparison result.

The apparatus further includes:
a display module, configured to display, in a user interface, a procedure of establishing a connection between the first terminal and the second terminal, where after the wireless connection is established, a successful wireless connection is prompted, and when establishing the wireless connection fails, the user is prompted to reenter the user information.

The apparatus further includes:
an enabling module, configured to automatically enable the wireless communication function when the first user information matches the first template.

According to the wireless connection apparatus of the embodiment of the present disclosure, the corresponding wireless communication function is enabled by comparing whether the user information entered by the user matches a template, and a wireless connection mode is determined according to time at which matching of the terminal is completed and time at which matching of the received opposite-end terminal is completed to establish a wireless connection between the terminals. The identity of the current user is determined according to the user information, which has high security. Decision of the wireless connection is implemented by comparing the time at which matching of the user information is completed. Therefore, password generation authentication procedures are simplified, use threshold is reduced for the user, a connection speed is quicker, a large number of manual operations are not needed, and thus the user experience and operation convenience are improved.

It is to be noted that the wireless connection apparatus of the embodiment of the present disclosure is an apparatus to which the above wireless connection method is applied. The implementations of the wireless connection method is applicable to the apparatus, and the same technical effects can be achieved.

### Sixth embodiment

An embodiment of the present disclosure further provides a terminal, which includes the above-mentioned wireless connection apparatus.

The terminal of the embodiment of the present disclosure captures user information entered by the user, enables the corresponding wireless communication function by comparing whether the user information entered by the user matches a template, and establishes a wireless connection between the terminals according to time at which matching of the terminal is completed and time at which matching of the received opposite-end terminal is completed. The identity of the current user is determined according to the user information, which has high security. Decision of the wireless connection is implemented by comparing the time at which matching of the user information is completed. Therefore, password generation authentication procedures are simplified, use threshold is reduced for the user, a connection speed is quicker, a large number of manual operations are not needed, and thus the user experience and operation convenience are improved.

It is to be noted that the terminal of the embodiment of the present disclosure is a terminal to which the above wireless connection method is applied. The implementations of the wireless connection method is applicable to the terminal, and the same technical effects can be achieved.

Persons of ordinary skill in the art may understand that all or a part of steps in the foregoing method may be implemented by programs instructing the related hardware. The programs may be stored in a computer readable medium, such as a red-only memory, a magnetic disc, an optical disc or the like. Alternatively, all or a part of steps in the foregoing embodiments may also be implemented by one or more integrated circuits. Correspondingly, various modules/units in the foregoing embodiments may be implemented in the form of hardware, or be implemented in the form of software function modules. The present invention is not limited to combination of hardware and software in any particular form.

## Claims

1. A wireless connection method, applied to a first terminal, comprising:
performing (11) matching authentication on acquired first user information with a first template of a first terminal, wherein the first template is used for verifying whether a wireless communication function of the first terminal is enabled;
generating (12) first time information when the first user information matches the first template, wherein the first time information is generated by the first terminal according to time at which the matching between the first user information and the first template is completed;
receiving (13) second time information sent by a second terminal; wherein the second time information is generated by the second terminal according to time at which the matching between the acquired second user information and a second template of the second terminal is completed; and
establishing (14) a wireless connection between the first terminal and the second terminal according to the first time information of the first terminal and the second time information of the second terminal,
wherein the step of establishing a wireless connection between the first terminal and the second terminal according to the first time information of the first terminal and the second time information of the second terminal comprises:
determining (141b) whether the first time information satisfies a preset access rule;
setting (142b) the first terminal as a to-be-accessed party when the preset access rule is satisfied;
comparing (143b) the first time information with the second time information according to the received second time information of the second terminal to obtain a comparison result; and
establishing (144b) the wireless connection between the first terminal and the second terminal when the comparison result is within a preset threshold range,
wherein both the first time information and the second time information are N-digit time data; and
the step of correspondingly, the determining whether the first time information satisfies a preset access rule comprises:
acquiring first data in the first time information, wherein the first data are N^{th}-digit data in the first time information; and
determining whether the first time information satisfies the preset access rule according to whether the first data is an odd number.

2. The wireless connection method according to claim 1, wherein the establishing the wireless connection between the first terminal and the second terminal according to the first time information of the first terminal and the second time information of the second terminal further comprises:
acquiring second data in the first time information when the first terminal is set as the to-be-accessed party and the second time information of the second terminal is not received, wherein the second data are (N-i)^{th}-digit data of the first time information, and the i denotes acquiring the second data for the i^{th} time; and
determining whether the first time information satisfies the preset access rule according to the odevity of the second data, and going to the step of setting the first terminal as a to-be-accessed party when the first time information satisfies the preset access rule until establishing the wireless connection between the first terminal and the second terminal.

3. The wireless connection method according to claim 1, wherein the comparing the first time information with the second time information to obtain a comparison result comprises:
acquiring a tolerance or ratio between the first time information and the second time information as the comparison result.

4. A wireless connection apparatus, included in a first terminal, comprising:
a matching authentication module (10), configured to perform matching authentication on acquired first user information with a first template of the first terminal, wherein the first fingerprint template is used for verifying whether a wireless communication function of the first terminal is enabled;
a generating module (20), configured to generate first time information when the first user information matches the first template, wherein the first time information is generated by the first terminal according to time at which the matching between the first user information and the first template is completed;
a receiving module (30), configured to receive second time information sent by a second terminal; wherein the second time information is generated by the second terminal according to time at which the matching between the acquired second user information and a second template of the second terminal is completed; and
a wireless connection establishing module (40), configured to establish a wireless connection between the first terminal and the second terminal according to the first time information of the first terminal and the second time information of the second terminal,
wherein the wireless connection establishing module comprises:
a determining submodule, configured to determine whether the first time information satisfies a preset access rule;
a setting submodule, configured to set the first terminal as a to-be-accessed party when the preset access rule is satisfied;
a second comparison submodule, configured to compare the first time information with the second time information according to the received second time information of the second terminal to obtain a comparison result; and
a second access submodule, configured to establish the wireless connection between the first terminal and the second terminal when the comparison result is within a preset threshold range,
wherein both the first time information and the second time information are N-digit time data; and
correspondingly, the determining submodule comprises:
a first acquiring unit, configured to acquire first data in the first time information, wherein the first data are N^{th}-digit data in the first time information; and
a determining unit, configured to determine whether the first time information satisfies the preset access rule according to whether the first data is an odd number.

5. The wireless connection apparatus according to claim 4, wherein the wireless connection establishing module further comprises:
an acquiring submodule, configured to acquire second data in the first time information when the first terminal is set as the to-be-accessed party and the second time information of the second terminal is not received, wherein the second data are (N-i)^{th}-digit data of the first time information, and the i denotes acquiring the second data for the i^{th} time; and
a processing submodule, configured to determine whether the first time information satisfies the preset access rule according to the odevity of the second data, and set the first terminal as a to-be-accessed party when the first time information satisfies the preset access rule to establish the wireless connection between the first terminal and the second terminal.

6. The wireless connection apparatus according to claim 4, wherein the first comparison submodule comprises:
a second acquiring unit, configured to acquire a tolerance or ratio between the first time information and the second time information as the comparison result.

7. The wireless connection apparatus according to claim 4, wherein the second comparison submodule comprises:
a third acquiring unit, configured to acquire a tolerance or ratio between the first time information and the second time information as the comparison result.

8. A terminal, comprising the wireless connection apparatus according to any one of claims 4-7.

9. A computer readable storage medium, storing a computer program, the computer program comprising program instructions, wherein when the program instructions are executed by a terminal device, the terminal device is caused to perform the method according to any one of claims 1-3.

## Patentansprüche

1. Drahtlosverbindungsverfahren, das auf ein erstes Endgerät angewendet wird, umfassend:
Durchführen (11) einer Übereinstimmungsprüfung für erfasste erste Benutzerangaben mit einer ersten Vorlage eines ersten Endgeräts, wobei die erste Vorlage verwendet wird, um zu prüfen, ob eine Drahtloskommunikationsfunktion des ersten Endgeräts aktiviert ist;
Erzeugen (12) von ersten Zeitangaben, wenn die ersten Benutzerangaben mit der ersten Vorlage übereinstimmen. wobei die ersten Zeitangaben vom ersten Endgerät entsprechend der Zeit erzeugt werden, zu der die Übereinstimmungsprüfung zwischen den ersten Benutzerangaben und der ersten Vorlage abgeschlossen ist;
Empfangen (13) von zweiten Zeitangaben, die von einem zweiten Endgerät gesendet wurden; wobei die zweiten Zeitangaben von dem zweiten Endgerät entsprechend der Zeit erzeugt werden, zu der die Übereinstimmungsprüfung zwischen den erfassten zweiten Benutzerangaben und einer zweiten Vorlage des zweiten Endgeräts abgeschlossen ist; und
Einrichten (14) einer Drahtlosverbindung zwischen dem ersten Endgerät und dem zweiten Endgerät entsprechend den ersten Zeitangaben des ersten Endgeräts und den zweiten Zeitangaben des zweiten Endgeräts,
wobei der Schritt des Einrichtens einer Drahtlosverbindung zwischen dem ersten Endgerät und dem zweiten Endgerät entsprechend den ersten Zeitangaben des ersten Endgeräts und den zweiten Zeitangaben des zweiten Endgeräts Folgendes umfasst:
Bestimmen (141b), ob die ersten Zeitangaben eine voreingestellte Zugriffsregel erfüllen;
Einstellen (142b) des ersten Endgeräts als Teilnehmer, auf den zugegriffen werden soll, wenn die Zugriffsregel erfüllt ist;
Vergleichen (143b) der ersten Zeitangaben mit den zweiten Zeitangaben entsprechend den empfangenen zweiten Zeitangaben des zweiten Endgeräts zum Erhalten eines Vergleichsergebnisses; und
Einrichten (144b) der Drahtlosverbindung zwischen dem ersten Endgerät und dem zweiten Endgerät, wenn das Vergleichsergebnis in einem voreingestellten Grenzbereich liegt,
wobei sowohl die ersten Zeitangaben als auch die zweiten Zeitangaben N-stellige Zeitdaten sind; und
der Schritt des entsprechenden Bestimmens, ob die ersten Zeitangaben eine voreingestellte Zugriffsregel erfüllen, Folgendes umfasst:
Erfassen erster Daten in den ersten Zeitangaben, wobei die ersten Daten Daten mit N-ten Stellen in den ersten Zeitangaben sind; und
Bestimmen, ob die ersten Zeitangaben die voreingestellte Zugriffsregel erfüllen, nach der die ersten Daten eine ungerade Zahl sind.

2. Drahtlosverbindungsverfahren nach Anspruch 1, wobei das Einrichten der Drahtlosverbindung zwischen dem ersten Endgerät und dem zweiten Endgerät entsprechend den ersten Zeitangaben des ersten Endgeräts und den zweiten Zeitangaben des zweiten Endgeräts ferner Folgendes umfasst:
Erfassen von zweiten Daten in den ersten Zeitangaben, wenn das erste Endgerät als Teilnehmer, auf den zugegriffen werden soll, eingerichtet ist und die zweiten Zeitangaben vom zweiten Endgerät nicht empfangen werden, wobei die zweiten Daten Daten mit (N-i)-ten Stellen der ersten Zeitangaben sind, wobei das i das Erfassen der zweiten Daten zum i-ten Mal bezeichnet; und
Bestimmen, ob die ersten Zeitangaben die voreingestellte Zugriffsregel bezüglich der Parität der zweiten Daten erfüllen, sowie Übergehen zum Schritt des Einrichtens des ersten Endgeräts als Teilnehmer, auf den zugegriffen werden soll, wenn die ersten Zeitangaben die voreingestellte Zugriffsregel erfüllen, bis die Drahtlosverbindung zwischen dem ersten Endgerät und dem zweiten Endgerät eingerichtet ist.

3. Drahtlosverbindungsverfahren nach Anspruch 1, wobei das Vergleichen der ersten Zeitangaben mit den zweiten Zeitangaben zum Erhalten eines Vergleichsergebnisses Folgendes umfasst:
Erfassen eines Toleranzbereichs oder Verhältnisses zwischen den ersten Zeitangaben und den zweiten Zeitangaben als Vergleichsergebnis.

4. Drahtlosverbindungsvorrichtung, die in einem ersten Endgerät enthalten ist, umfassend:
ein Übereinstimmungsprüfmodul (10), das zum Durchführen einer Übereinstimmungsprüfung für erfasste erste Benutzerangaben mit einer ersten Vorlage des ersten Endgeräts ausgebildet ist, wobei die erste Fingerabdruckvorlage verwendet wird, um zu prüfen, ob eine Drahtloskommunikationsfunktion des ersten Endgeräts aktiviert ist;
ein Erzeugungsmodul (20), das zum Erzeugen von ersten Zeitangaben ausgebildet ist, wenn die ersten Benutzerangaben mit der ersten Vorlage übereinstimmen, wobei die ersten Zeitangaben vom ersten Endgerät entsprechend der Zeit erzeugt werden, zu der die Übereinstimmungsprüfung zwischen den ersten Benutzerangaben und der ersten Vorlage abgeschlossen ist;
ein Empfangsmodul (30), das zum Empfangen von zweiten Zeitangaben ausgebildet ist, die von einem zweiten Endgerät gesendet wurden; wobei die zweiten Zeitangaben von dem zweiten Endgerät entsprechend der Zeit erzeugt werden, zu der die Übereinstimmungsprüfung zwischen den erfassten zweiten Benutzerangaben und einer zweiten Vorlage des zweiten Endgeräts abgeschlossen ist; und
ein Drahtlosverbindungs-Einrichtungsmodul (40), das zum Einrichten einer Drahtlosverbindung zwischen dem ersten Endgerät und dem zweiten Endgerät entsprechend den ersten Zeitangaben des ersten Endgeräts und den zweiten Zeitangaben des zweiten Endgeräts ausgebildet ist,
wobei das Drahtlosverbindungs-Einrichtungsmodul Folgendes aufweist:
ein Bestimmungs-Submodul, das zum Bestimmen, ob die ersten Zeitangaben eine voreingestellte Zugriffsregel erfüllen, ausgebildet ist;
ein Einstellungs-Submodul, das zum Einstellen des ersten Endgeräts als Teilnehmer, auf den zugegriffen werden soll, wenn die voreingestellte Zugriffsregel erfüllt ist, ausgebildet ist;
ein zweites Vergleichs-Submodul, das zum Vergleichen der ersten Zeitangaben mit den zweiten Zeitangaben entsprechend den empfangenen zweiten Zeitangaben des zweiten Endgeräts zum Erhalten eines Vergleichsergebnisses ausgebildet ist; und
ein zweites Zugriffs-Submodul, das zum Einrichten der Drahtlosverbindung zwischen dem ersten Endgerät und dem zweiten Endgerät, wenn das Vergleichsergebnis in einem voreingestellten Grenzbereich liegt, ausgebildet ist,
wobei sowohl die ersten Zeitangaben als auch die zweiten Zeitangaben N-stellige Zeitdaten sind; und
das Bestimmungs-Submodul entsprechend Folgendes aufweist:
eine erste Erfassungseinheit, die zum Erfassen erster Daten in den ersten Zeitangaben ausgebildet ist, wobei die ersten Daten Daten mit N-ten Stellen in den ersten Zeitangaben sind; und
eine Bestimmungseinheit, die zum Bestimmen ausgebildet ist, ob die ersten Zeitangaben die voreingestellte Zugriffsregel erfüllen, nach der die ersten Daten eine ungerade Zahl sind.

5. Drahtlosverbindungsvorrichtung nach Anspruch 4, wobei das Drahtlosverbindungs-Einrichtungsmodul ferner Folgendes aufweist:
ein Erfassungs-Submodul, das zum Erfassen von zweiten Daten in den ersten Zeitangaben, ausgebildet ist, wenn das erste Endgerät als Teilnehmer, auf den zugegriffen werden soll, eingerichtet ist und die zweiten Zeitangaben vom zweiten Endgerät nicht empfangen werden, wobei die zweiten Daten Daten mit (N-i)-ten Stellen der ersten Zeitangaben sind, wobei das i das Erfassen der zweiten Daten zum i-ten Mal bezeichnet; und
ein Verarbeitungs-Submodul, das zum Bestimmen ausgebildet ist, ob die ersten Zeitangaben die voreingestellte Zugriffsregel bezüglich der Parität der zweiten Daten erfüllen, sowie zum Einrichten des ersten Endgeräts als Teilnehmer, auf den zugegriffen werden soll, wenn die ersten Zeitangaben die voreingestellte Zugriffsregel erfüllen, um die Drahtlosverbindung zwischen dem ersten Endgerät und dem zweiten Endgerät einzurichten.

6. Drahtlosverbindungsvorrichtung nach Anspruch 4, wobei das erste Vergleichs-Submodul Folgendes aufweist:
eine zweite Erfassungseinheit, die zum Erfassen eines Toleranzbereichs oder Verhältnisses zwischen den ersten Zeitangaben und den zweiten Zeitangaben als Vergleichsergebnis ausgebildet ist.

7. Drahtlosverbindungsvorrichtung nach Anspruch 4, wobei das zweite Vergleichs-Submodul Folgendes aufweist:
eine dritte Erfassungseinheit, die zum Erfassen eines Toleranzbereichs oder Verhältnisses zwischen den ersten Zeitangaben und den zweiten Zeitangaben als Vergleichsergebnis ausgebildet ist.

8. Endgerät, das die Drahtlosverbindungsvorrichtung nach einem der Ansprüche 4-7 aufweist.

9. Computerlesbares Speichermedium, das ein Computerprogramm speichert, wobei das Computerprogramm Programmanweisungen umfasst, wobei bei Ausführung der Programmanweisungen durch ein Endgerät das Endgerät zum Durchführen des Verfahrens nach einem der Ansprüche 1-3 veranlasst wird.

## Revendications

1. Procédé de connexion sans fil, appliqué à un premier terminal, comprenant le fait :
d'effectuer (11) une authentification par mise en correspondance sur des premières informations d'utilisateur acquises avec un premier modèle d'un premier terminal, où le premier modèle est utilisé pour vérifier si une fonction de communication sans fil du premier terminal est activée ;
de générer (12) des premières informations temporelles lorsque les premières informations d'utilisateur correspondent au premier modèle, où les premières informations temporelles sont générées par le premier terminal en fonction du moment auquel la mise en correspondance entre les premières informations d'utilisateur et le premier modèle est terminée ;
de recevoir (13) des deuxièmes informations temporelles envoyées par un deuxième terminal ; où les deuxièmes informations temporelles sont générées par le deuxième terminal en fonction du moment auquel la mise en correspondance entre les deuxièmes informations d'utilisateur acquises et un deuxième modèle du deuxième terminal est terminée ; et
d'établir (14) une connexion sans fil entre le premier terminal et le deuxième terminal en fonction des premières informations temporelles du premier terminal et des deuxièmes informations temporelles du deuxième terminal,
dans lequel l'étape consistant à établir une connexion sans fil entre le premier terminal et le deuxième terminal en fonction des premières informations temporelles du premier terminal et des deuxièmes informations temporelles du deuxième terminal comprend le fait :
de déterminer (141b) si les premières informations temporelles satisfont une règle d'accès prédéfinie ;
de définir (142b) le premier terminal en tant que partie faisant l'objet d'un accès lorsque la règle d'accès prédéfinie est satisfaite ;
de comparer (143b) les premières informations temporelles aux deuxièmes informations temporelles en fonction des deuxièmes informations temporelles reçues du deuxième terminal pour obtenir un résultat de comparaison ; et
d'établir (144b) la connexion sans fil entre le premier terminal et le deuxième terminal lorsque le résultat de comparaison se situe dans une plage de seuil prédéfinie,
dans lequel les premières informations temporelles et les deuxièmes informations temporelles sont toutes deux des données temporelles à N caractères numériques ; et
par conséquence, l'étape consistant à déterminer si les premières informations temporelles satisfont une règle d'accès prédéfinie comprend le fait :
d'acquérir des premières données dans les premières informations temporelles, où les premières données sont des données au N^{ème} caractère numérique dans les premières informations temporelles ; et
de déterminer si les premières informations temporelles satisfont la règle d'accès prédéfinie en fonction du fait que les premières données représentent un nombre impair.

2. Procédé de connexion sans fil selon la revendication 1, dans lequel l'établissement de la connexion sans fil entre le premier terminal et le deuxième terminal en fonction des premières informations temporelles du premier terminal et des deuxièmes informations temporelles du deuxième terminal comprend en outre le fait :
d'acquérir des deuxièmes données dans les premières informations temporelles lorsque le premier terminal est défini comme étant la partie faisant l'objet d'un accès et que les deuxièmes informations temporelles du deuxième terminal ne sont pas reçues, où les deuxièmes données sont des données au (N-i)^{ème} caractère numérique des premières informations temporelles, et le i désigne l'acquisition des deuxièmes données pour le i^{ème} moment ; et
de déterminer si les premières informations temporelles satisfont la règle d'accès prédéfinie en fonction de la parité des deuxièmes données, et de passer à l'étape de définition du premier terminal en tant que partie faisant l'objet d'un accès lorsque les premières informations temporelles satisfont la règle d'accès prédéfinie jusqu'à l'établissement de la connexion sans fil entre le premier terminal et le deuxième terminal.

3. Procédé de connexion sans fil selon la revendication 1, dans lequel la comparaison des premières informations temporelles aux deuxièmes informations temporelles pour obtenir un résultat de comparaison comprend le fait :
d'acquérir une tolérance ou un rapport entre les premières informations temporelles et les deuxièmes informations temporelles comme étant le résultat de comparaison.

4. Appareil de connexion sans fil, inclus dans un premier terminal, comprenant :
un module d'authentification par mise en correspondance (10), configuré pour effectuer une authentification par mise en correspondance sur des premières informations d'utilisateur acquises avec un premier modèle du premier terminal, où le premier modèle d'empreinte digitale est utilisé pour vérifier si une fonction de communication sans fil du premier terminal est activée ;
un module de génération (20), configuré pour générer des premières informations temporelles lorsque les premières informations d'utilisateur correspondent au premier modèle, où les premières informations temporelles sont générées par le premier terminal en fonction du moment auquel la mise en correspondance entre les premières informations d'utilisateur et le premier modèle est terminée ;
un module de réception (30), configuré pour recevoir des deuxièmes informations temporelles envoyées par un deuxième terminal ; où les deuxièmes informations temporelles sont générées par le deuxième terminal en fonction du moment auquel la mise en correspondance entre les deuxièmes informations d'utilisateur acquises et un deuxième modèle du deuxième terminal est terminée ; et
un module d'établissement de connexion sans fil (40), configuré pour établir une connexion sans fil entre le premier terminal et le deuxième terminal en fonction des premières informations temporelles du premier terminal et des deuxièmes informations temporelles du deuxième terminal,
dans lequel le module d'établissement de connexion sans fil comprend :
un sous-module de détermination, configuré pour déterminer si les premières informations temporelles satisfont une règle d'accès prédéfinie ;
un sous-module de définition, configuré pour définir le premier terminal en tant que partie faisant l'objet d'un accès lorsque la règle d'accès prédéfinie est satisfaite ;
un deuxième sous-module de comparaison, configuré pour comparer les premières informations temporelles aux deuxièmes informations temporelles en fonction des deuxièmes informations temporelles reçues du deuxième terminal pour obtenir un résultat de comparaison ; et
un deuxième sous-module d'accès, configuré pour établir la connexion sans fil entre le premier terminal et le deuxième terminal lorsque le résultat de comparaison se situe dans une plage de seuil prédéfinie,
dans lequel les premières informations temporelles et les deuxièmes informations temporelles sont toutes deux des données temporelles à N caractères numériques ; et
par conséquence, le sous-module de détermination comprend :
une première unité d'acquisition, configurée pour acquérir des premières données dans les premières informations temporelles, où les premières données sont des données au N^{ème} caractère numérique dans les premières informations temporelles ; et
une unité de détermination, configurée pour déterminer si les premières informations temporelles satisfont la règle d'accès prédéfinie en fonction du fait que les premières données représentent un nombre impair.

5. Appareil de connexion sans fil selon la revendication 4, dans lequel le module d'établissement de connexion sans fil comprend en outre :
un sous-module d'acquisition, configuré pour acquérir des deuxièmes données dans les premières informations temporelles lorsque le premier terminal est défini comme étant la partie faisant l'objet d'un accès et que les deuxièmes informations temporelles du deuxième terminal ne sont pas reçues, où les deuxièmes données sont des données au (N-i)^{ème} caractère numérique des premières informations temporelles, et i désigne l'acquisition des deuxièmes données pour le i^{ème} moment ; et
un sous-module de traitement, configuré pour déterminer si les premières informations temporelles satisfont la règle d'accès prédéfinie en fonction de la parité des deuxièmes données, et pour définir le premier terminal en tant que partie faisant l'objet d'un accès lorsque les premières informations temporelles satisfont la règle d'accès prédéfinie pour établir la connexion sans fil entre le premier terminal et le deuxième terminal.

6. Appareil de connexion sans fil selon la revendication 4, dans lequel le premier sous-module de comparaison comprend :
une deuxième unité d'acquisition, configurée pour acquérir une tolérance ou un rapport entre les premières informations temporelles et les deuxièmes informations temporelles comme étant le résultat de comparaison.

7. Appareil de connexion sans fil selon la revendication 4, dans lequel le deuxième sous-module de comparaison comprend :
une troisième unité d'acquisition, configurée pour acquérir une tolérance ou un rapport entre les premières informations temporelles et les deuxièmes informations temporelles comme étant le résultat de comparaison.

8. Terminal, comprenant l'appareil de connexion sans fil selon l'une quelconque des revendications 4 à 7.

9. Support de stockage lisible par ordinateur, stockant un programme informatique, le programme informatique comprenant des instructions de programme, dans lequel, lorsque les instructions de programme sont exécutées par un dispositif de terminal, le dispositif de terminal est amené à exécuter le procédé selon l'une quelconque des revendications 1 à 3.
